## Europäisches Patentamt

## European Patent Office

## Office européen des brevets

(19)

(11) Veröffentlichungsnummer: **0 154 874**
**B1**

(12) # EUROPÄISCHE PATENTSCHRIFT

(45) Veröffentlichungstag der Patentschrift:
**12.08.87**

(51) Int. Cl.⁴: **C 08 L 61/34,** C 08 L 71/06, C 08 J 9/00, C 08 K 3/00

(21) Anmeldenummer: **85102023.0**

(22) Anmeldetag: **23.02.85**

(54) **Verbessertes Füllstoffsystem für einen nicht brennbaren Hartschaum und seine Verwendung als Baustoff.**

(30) Priorität: **01.03.84 DE 3407512**

(43) Veröffentlichungstag der Anmeldung:
**18.09.85 Patentblatt 85/38**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**BE-A-763 904**
**DE-A-2 717 775**
**DE-B-2 825 295**

**Die Akte enthält technische Angaben, die nach dem Eingang der Anmeldung eingereicht wurden und die nicht in dieser Patentschrift enthalten sind.**

(73) Patentinhaber: **Rühl, Erich, Hugenottenstrasse 105, D-6382 Friedrichsdorf (DE)**

(72) Erfinder: **Rühl, Erich, Saalburgstrasse 65, D-6382 Friedrichsdorf (DE)**
Erfinder: **Thenner, Johann, Dr., Heinestrasse 7, D-6301 Pohlheim 1 (DE)**

(74) Vertreter: **Sternagel, Hans- Günther, Dr., Patentanwälte Dr. Michael Hann Dr. H.- G. Sternagel Sander Aue 30, D-5060 Bergisch Gladbach 2 (DE)**

EP 0 154 874 B1

**0 154 874**

## Beschreibung

Im DE-A - 32 44 779 ist ein nicht brennbarer Hartschaum auf Basis von Phenolharz und Furanharz beschrieben, der ein Füllstoffsystem aus Aluminiumhydroxid und weiteren Komponenten enthält.

Die Erfindung richtet sich auf ein noch weiter verbessertes Füllstoffsystem durch Kombination von Aluminiumhydroxid mit weiteren Komponenten.

Der Hartschaum weist ein Raumgewicht von 50 kg/m³ bis 450 kg/m³ auf und genügt den Erfordernissen nach DIN 4102 und DIN 53436, so daß er als nicht brennbarer Baustoff verwendet werden kann.

Phenolharzschaumstoffe werden bereits in Rohdichten von 400 bis 100 kg/m³ hergestellt. Wegen ihrer relativ hohen Geschlossenzelligkeit von etwa 75 % werden diese im Bauwesen hauptsächlich als Wärmedammstoff verwendet. Bei diesen duroplastischen Schaumstoffen erfolgt wegen ihrer dreidimensionalen Vernetzung im Brandfalle vornehmlich verstarkte Verkohlung. Die entstehende Kohlenstoffschicht schützt den darunterliegenden Schaum vor weiterem Flammenangriff und ferner bewirkt diese Kohlenstoffschicht im Falle einer Zündung von Pyrolysegasen ein Erloschen der Flamme.

Das Brennen ist ein Vorgang, der sich an der Oberfläche des Schaumstoffes abspielt, d.h. das Ausmaß des Brennens wird durch die zur Verfügung stehende Oberfläche bestimmt, die bei Schaumstoffen mit Raumgewichten bis zu 40 kg/ m³ herab sehr groß ist. Dies hat zur Folge, daß das brennbare Material im gesamten Flammen- und Strahlungsbereich beinahe vollständig pyrolysiert wird. Fördernd wirkt sich hier noch eine gewisse Geschlossenzelligkeit und die damit verbundene geringe Wärmeleitfähigkeit aus, die zu einem Wärmestau führt. Dies unterstützt zusätzlich die Pyrolyse und den Brennvorgang.

Eine Wärmebeständigkeit bei Phenolharzschäumen besteht bis etwa 130°C, möglich ist eine kurzzeitige Belastung bis 250°C. Die Emission flüchtiger Gase beginnt bei 270°C, welche bei offener Flamme kurzzeitig brennen. Ab 400°C ist nur noch ein Glimmen zu beobachten, welches durch Oxidationsvorgänge an der Oberflache der festen Kohlenstoffharze verursacht wird. Ein Zusatz von Borsäure zum Phenolharz wirkt als Flammschutzmittel. Da jedoch Borsäure als langsam wirkender Harter die Standzeit des Phenolharzes auf 24 Stunden beschrankt, führt der Zusatz von Borsäure als Flammschutzmittel zu Phenolharzmischungen zu Verarbeitungsschwierigkeiten, insbesondere ist die Zugabe nur unmittelbar vor der Verarbeitung möglich.

J. Troitsch weist in Kunststoffe 69/9, Seite 558 - 561 (1979) darauf hin, daß es nur wenige anorganische Verbindungen gibt, die sich als Flammschutzmittel für den Einsatz in Kunststoffen eignen. Aluminiumhydroxid und borhaltige Verbindungen werden für diesen Zweck eingesetzt, weil sie sich in Kunststoffe einarbeiten lassen.

J. Greber und D.J. Braun beschreiben in Plastverarbeiter 33/1; Seite 43 - 46 (1982), daß Aluminiumhydroxid als ein flammhemmender Füllstoff für ungesattigte Polyesterharze verwendet werden kann. Um Bauteile herzustellen, die bei der Brandprüfung nach DIN 4102 zur Einstufung in die Klasse B1 (schwer entflammbar) führen, sind Füllstoffgehalte von mehr als 55 Gew.% erforderlich. Bei den notwendigen hohen Füllgraden stellen sich jedoch erhebliche Verarbeitungsprobleme ein, die nur teilweise durch Verwendung von speziellen Aluminiumhydroxiden überwunden werden können. Da das Brandverhalten von Materialien nicht nur durch den Anteil von Flammschutzmittel in der Mischung, sondern auch vom konstruktiven Aufbau der Prüfkorper bestimmt wird, ist die Ausrüstung von ungesättigten Polyesterharzen mit Aluminiumhydroxid ale Flammschutzmittel problematischer als der Brandschutz mit üblichen Halogen-Antimon-Systemen.

Aus DE-A-28 25 295 ist ein nicht brennbarer Werkstoff, der keine toxischen Rauchgase entwickelt, auf Basis von Phenolharzen und Furfurylalkohol bekannt. Der Werkstoff enthält als anorganischen Füllstoff 62 - 66 Gew.% Aluminiumoxid oder Aluminiumhydroxid und kann zusätzlich noch bis zu 3 Gew.% feinteilige Kieselsäure und weitere andere Bestandteile enthalten. Durch Zusatz von Treibmitteln läßt sich ein geschlossenporiger Hartschaum mit einem Raumgewicht von 500 g/l herstellen.

Der Werkstoff weist jedoch eine Reihe von Nachteilen auf.

Wegen der Anwendung von organischen Sulfosäuren als Einzelkomponente im Härtersystem ist das ausgehärtete Fertigprodukt hygroskopisch und damit auch durch eine verlangerte Reifezeit gekennzeichnet.

Es wurde festgestellt, daß wegen der hohen Dichte die Reifezeit bis zur endgültigen Festigkeit einige Wochen betragt. Überdies ist dieser Werkstoff gegenüber metallischen Oberflächen stark korrodierend.

Infolge der hohen Viskosität des Reaktionsgemisches bildet sich beim Schäumen ein weitgehend inhomogenes Schaumgefüge aus.

Überdies ist bei Brandbelastung der Anteil von Schwefeldioxid im Rauch- bzw. Schwelgas noch sehr hoch.

Der in DE-A 32 44 779 beschriebene Hartschaum weist ein Raumgewicht unter 500 kg/m³ auf und gibt bei Brandbelastung keine toxischen oder korrosiven Gase ab. Seine mechanischen und isolierenden Eigenschaften ermöglichen die Verwendung im Baubereich, denn sie genügen den Anforderungen, Klasse A 2 (nicht brennbar) bei der Brandprüfung nach DIN 4102.

Aufgabe der Erfindung ist die weitere Verbesserung der Eigenschaften, insbesondere des Füllstoffsystems des Hartschaumes gemäß DE-A 32 44 779.

Diese Aufgabe wird gelöst durch einen nicht brennbaren, Aluminiumhydroxid und weitere Komponenten als Füllstoffsystem enthaltenden Hartschaum auf Basis von Phenolharz und Furanharz, dessen Gewichtsverhältnis Füllstoff:Harzkörper: mindestens 2,5:1 und das Raumgewicht 50 kg/m³ bis 450 kg/m³ beträgt, und dessen Harzkomponente erhalten wurde durch Umsetzen von:

50 - 62 Gew.-Tl. Resolharz

0 - 15 Gew.-Tl. Furanharz

2

0 154 874

25 - 40 Gew.-Tl. Furfurylalkohol
0,5 - 5 Gew.-Tl. Schaumstabilisator
mit 14 - 17 Gew.-Tl. pro 100 Gew.-Tl. Harzkomponente + Füllstoff einer Härtermischung aus
40 - 50 Gew.-Tl. Phosphorsäure
12 - 17 Gew.-Tl. Borfluorwasserstoffsäure, sowie entweder
5,5 - 7 Gew.-Tl. p-Toluolsulfonsäure und
29,5 - 35 Gew.-Tl. Wasser oder
6 - 7 Gew.-Tl. p-Phenolsulfonsäure und
32 - 35 Gew.-Tl. Wasser,
welcher dadurch gekennzeichnet ist, daß der Füllstoff aus
40 - 55 Gew.-Tl. Aluminiumhydroxid, welches teilweise durch säureaktivierte Bentonite, Montmorillonite oder Zeolithe oder durch Magnesium- oder Zink-Aluminat der allgemeinen Formel $Me^{II}Al_2O_4$, natürliche vorkommende Spinelle, gemahlene Hochofenschlacke oder natürliche Perlite ersetzt sein kann,
10 - 20 Gew.-Tl. Borsäure
2 - 4 Gew.-Tl. Natriumtetraborat
7 - 25 Gew.-Tl. Kryolith und
1 - 3 Gew.-Tl. Kupfer-II-oxid besteht, wobei das Gewichts-Verhältnis von Borat:Borsäure 1:5 beträgt.

Der, Aluminiumhydroxid und weitere Komponenten als Füllstoffsystem enthaltende Hartschaum besteht aus einer Harzkomponente und einer Füllstoffmischung, wobei das Gewichtsverhältnis Füllstoff:Harzkörper mindestens 2,5:1 und das Raumgewicht 50 kg/m³ bis 450 kg/m³ beträgt.

Die Harzkomponente wird erhalten durch Umsetzung von 50 - 62 Gewichtsteilen Resolharz, 0 - 15 Gewichtsteilen Furanharz, 25 - 40 Gewichtsteilen Furfurylalkohol, und 0,5 - 5 Gewichtsteilen Schaumstabilisator in Gegenwart der Füllstoffmischung, mit 14 - 17 Gewichtsteilen pro 100 Gewichtsteile Harzkomponente plus Füllstoff, einer Härtermischung aus 40 - 50 Gewichtsteilen Phosphorsäure, 12 - 17 Gewichtsteilen Borfluorwasserstoffsäure, sowie entweder 5,5 - 7 Gewichtsteilen p-Toluolsulfonsäure und 29,5 - 35 Gewichtsteilen Wasser oder 6 - 7 Gew.-Tl. p-Phenolsulfonsäure und 32 - 35 Gew.Tl. Wasser.

Für die Harzkomponente werden vorzugsweise ein Resolharz, in Form eines Vorkondensats aus Phenol und Formaldehyd mit einem mittleren Molekulargewicht von 500 und gegebenenfalls ein Furanharz in Form eines Vorkondensats aus Furfurylalkohol und Furfurylaldehyd zusammen mit weiterem Furfurylalkohol mit einem Härtergemisch zur Umsetzung gebracht. In einer exothermen Reaktion setzt der Härteprozeß nach einer einstellbaren Startzeit ein. Die entwickelte Wärmemenge ist ausreichend, um ein Treibmittel, z. B. Fluorkohlenwasserstoffe, so weit zu verdampfen, daß das gewünschte Schaumgefüge entsteht. Das Treibmittel kann der Harzkomponente zugesetzt sein, wenn es sich um eine feststehende Formulierung für ein konstantes Raumgewicht handelt, oder wird als zusätzliche Komponente unmittelbar beim Mischen der Harzvorprodukte und der Härtermischung zugefügt.

Durch den Zusatz der oben genannten Füllstoffe werden im Brandfalle die flüchtigen Pyrolyseprodukte bereits unterhalb der Entzündungstemperatur in Freiheit gesetzt. Dabei hat sich ein Verhältnis Harzkörper zu anorganischem Füllstoff von 1: 2,5 bis 1: 3,2 als bevorzugt und zweckmäßig erwiesen, um die Unbrennbarkeit nach DIN 4102 zu erreichen.

Die bei Brandbelastung freiwerdenden Pyrolyse-Produkte können durch verschiedene Kombinationen der Füllstoffe für das weitere Brandgeschehen unschädlich gemacht werden.

Wegen des geringeren Raumgewichts eines Schaumstoffes gegenüber einem kompakten Körper wird pro Volumen weniger brennbare Substanz angeboten. Andererseits ist jedoch ein von der Oberfläche weiter in die Tiefe des Schaumkörpers reichender Bereich dem Brand ausgesetzt wegen der Oberflächenvergrößerung infolge der vielen Zellen des Schaumstoffes. Diese Vergrößerung der aktiven inneren Oberfläche kann jedoch benutzt werden, um die bei Brandbelastung auftretenden Pyrolyse-Produkte so weit zu oxidieren, daß sie entweder nicht mehr brennbar sind oder die Kohlenmonoxidbildung weitgehend verhindert ist.

Der Hauptanteil des anorganischen Füllstoffgemisches ist ein Aluminiumhydroxid im Gemisch mit Kryolith, wobei gegebenenfalls ein Teil des Aluminiumhydroxids durch Bentonit, Montmorrilonit, Zeolith, Magnesium- oder Zink-Aluminat der Formel $Me^{II}Al_2O_4$, natürlich vorkommende Spinelle, gemahlene Hochofenschlacke oder natürliche Perlite ersetzt sein kann.

Das Füllstoffgemisch aus $Al(OH)_3$, Kryolith und den gegebenenfalls weiteren genannten Bestandteilen weist vorzugsweise eine bestimmte Korngrößenverteilung auf, weil bei unterschiedlich großer aktiver Oberfläche dieses FFüllstoffes eine nicht ausreichende Benetzung durch das Harz erfolgen kann, so daß der Zusammenhalt im ausgehärteten Zustand mangelhaft wird. Schließlich kann die Viskosität des Gemisches aus Harzkomponente und Füllstoff für die Verarbeitung zu hoch werden.

Das am besten geeignete Füllstoffsystem weist eine Siebdurchgangssummenkurve mit den Werten
25 % 5,5 μm
50 % 52,0 μm
75 % 80,0 μm
auf. Andere Verteilungszusammensetzungen können ebenfalls verwendet werden, sofern die Teilchen eine geeignete Teilchenform aufweisen, beispielsweise vorzugsweise kugelförmig sind.

Die Wirksamkeit des Aluminiumhydroxids in Kombination mit Kryolith als Flammschutzmittel beruht neben einer Verdünnung des Systems auf einem rein physikalischen Effekt. In einem endothermen Prozeß wird bei Brandbelastung Wasser abgespalten und es erfolgt eine Verdünnung der brennbaren Pyrolyse-Produkte und

3

gleichzeitig auch Kühlung unter Verringerung des Wärmeüberganges in tiefergelegene Schaumbereiche.

Neben der Wasserabspaltung tritt noch ein weiterer thermodynamischer Effekt auf:

Das im nachfolgenden Beispiel 2 aufgeführte Füllstoffsystem mit Aluminiumhydroxid, Borsäure, Natriumtetraborat und Kryolith entzieht Pro 100 g Harzkomponente der zugeführten Wärmemenge bei Brandbelastung insgesamt etwa 63 kJ Verdampfungs- und Schmelzenthalpie, worin die Schmelzenthalpie-Anteile von Kryolith und Borsäureanhydrid etwa 22,1 % betragen.

Besonders wichtig hierbei ist der Umstand, daß diese Schmelzenthalpie-Anteile erst in wesentlich höheren Temperaturbereichen entnommen werden, als die Verdampfungsenthalpien.

Überdies erfolgt an den Grenzflächen zwischen Kryolith-, Natriumtetraborat- und Borsäureanhydrid-Teilchen infolge Schmelzpunkterniedrigungen ein gewisser Sintereffekt. Dabei bleibt ein Skelett der ursprünglichen Schaumstruktur erhalten.

Teilweiser Austausch von Aluminiumhydroxid durch:

säureaktivierte, natürlich vorkommende Bentonite (Bleicherden), Montmorillonite, Zeolithe.

Diese Füllstoffkomponenten können auch synthetisch mittels Mischgelfällung, Trocknung und anschließende Mahlung hergestellt werden.

Das gemahlene Produkt soll vorzugsweise eine Siebdurchgangssummenkurve mit den Werten

25 % 5,5 μm

50 % 52,0 μm

75 % 80,0 μm

aufweisen.

Vor der Verwendung können diese Stoffe zusätzlich noch mit Wasserdampf beladen werden.

Diese Wasserdampfbeladung liegt erfahrungsgemäß bis zu etwa 20 Gew.% der eingesetzten Füllstoffkomponente. Zu hohe Beladung würde zu einer Plastifizierung, z. B. des Bentonits, führen.

Die Wassereinlagerung zwischen den Schichtgitterebenen der angeführten Substanzen ergibt eine zusätzliche Wasserdampfsperre bei hoher Wärmeeinwirkung auf den Hartschaum. Des weiteren werden Dilatanzerscheinungen im Viskositätsverhalten der A-Komponente vermieden.

Beispiel für ein Füllstoffsystem mit teilweisem Austausch von Aluminiumhydroxid:

30 - 45 Gew.Teile Aluminiumhydroxid

5 - 15 Gew.Teile Bentonit, Montmorillonit oder Zeolith

10 - 20 Gew.Teile Borsäure

2 - 4 Gew.Teile Natriumtetraborat

7 - 25 Gew.Teile Kryolith

1 - 3 Gew.Teile Kupferoxid

Teilweiser Austausch von Aluminiumhydroxid durch:

Aluminate der allgemeinen Formel $Me^{II}Al_2O_4$, wobei als Metall Magnesium oder Zink einzusetzen ist. (auch natürlich vorkommende Spinelle sind verwendbar);

Hochofenschlacke, gemahlen, vornehmlich als Calcium-Aluminiumsilicate;

natürlich vorkommende gemahlene Perlite, (Liporit bzw. Quarzporphyrgläser); nicht expandiert, so daß die vorhandenen mikrofeinen Wassereinschlüsse erhalten bleiben.

Die mikrofeinen Wassereinschlüsse werden bei einem höheren Temperaturbereich als bei Aluminiumhydroxid zur Wasserdampfsperre aktiviert.

Die Siebsummenkurve dieser gemahlenen Substanzen soll vorzugsweise ähnliche Werte wie bei Bentonit angeführt haben.

Beispiel für ein solches Füllstoffsystem:

20 - 40 Gew.Tl. Aluminiumhydroxid

10 - 30 Gew.Tl. Aluminate, Hochofenschlacke, Perlite

10 - 20 Gew.Tl. Borsäure

2 - 4 Gew.Tl. Natriumtetraborat

7 - 25 Gew.Tl. Kryolith

1 - 3 Gew.Tl. Kupferoxid

Ersatz von Natriumtetraborat durch:

Zinkborat 3 ZnO . 2 $B_2O$

Magnesiumhydroxid $Mg(OH)_2$

Zinkhydroxid $Zn(OH)_2$

wobei das Mengenverhältnis der Borsäure zu diesen Substanzen 5 : 1 beträgt.

Die Verwendung dieser Komponenten anstelle von Natriumtetraborat im Füllstoffsystem führt (ähnlich wie bei Tetraborat selbst) zu einer Pufferwirkung. Bei Zinkborat erhöht der Zink-Boranteil die katalytischen Wirkungen beim Carbonisierungs- und Schwelprozeß.

Beispiel für ein solches Füllstoffsystem:

40 - 50 Gew.Tl. Tonerdehydrat

10 - 20 Gew.Tl. Borsäure

2 - 4 Gew.Tl. Zinkborat, Magnesiumhydroxid oder Zinkoxid

7 - 25 Gew.Tl. Kryolith

1 - 3 Gew.Tl. Kupferoxid

Die Verwendung von Borverbindungen im Füllstoffsystem hat den Vorteil, daß bei Brandbelastung zunächst

4

eine stufenweise Abgabe von Wasser im Rahmen einer endothermen Reaktion unter Bildung von Borsäureanhydrid erfolgt. Das Harzporenskelett wird von einem glasartigen Überzug geschützt, weil Borsäureanhydrid bei etwa 350°C erweicht und ab 500°C zu fließen beginnt. Schließlich erfolgt durch säurekatalysierte Wasserentfernung aus der organischen Substanz eine Dehydratisierung, die zu einer verstärkten Verkohlung (Karbonisierung) der Harzkomponente führt.

Durch den Zusatz von Kupferoxid als Oxidationsmittel zum Füllstoff wird erreicht, daß funktionelle Gruppen der Harze während des gesamten ablaufenden Härteprozesses oxidativ umgewandelt werden, wobei Zyklisierung und Kondensation zu kohlenstoffreicheren Produkten führen. Diese begünstigen im Brandbelastungsfalle die Karbonisierung und schützen dann die unterhalb der eigentlichen Flammenzone befindliche Harzphase. Überdies wird bereits gebildetes Kohlenmonoxid in der unter der Carbonisierungszone liegenden geschlossenzelligen Schaumstruktur zu Kohlendioxid oxidiert (Erniedrigung der Toxizität).

Der erfindungsgemäß mögliche Zusatz weiterer anorganischer Zusätze zum Füllstoffsystem wie Magnesiumhydrosilikate oder wasserhaltige Aluminiumsilikate, z. B. Bentonit, hat den Zweck, daß sich diese Komponenten entweder mit den anorganischen Härterkomponenten umsetzen oder zugesetztes bzw. bei der Kondensation gebildetes Wasser binden.

Die Härtermischung besteht hauptsächlich aus anorganischen Säuren, mit einem geringen Anteil an p-Toluolsulfonsäure oder p-Phenolsulfonsäure. Die alleinige Verwendung organischer Sulfonsäuren ist nachteilhaft, da im Falle einer Brandbelastung oder bei Einwirkung von Schweltemperaturen (300 - 500°C) gebildetes Schwefeldioxid im Schwelgas-Gleichgewicht eine vermehrte Bildung von Kohlenmonoxid ergibt.

Im Hinblick auf einen zeitlich günstigen Reaktionsbeginn (Startzeit, Steigzeit des Schaumes) und einer möglichst geringen Zusatzmengen an Härter haben sich folgende Säurekombinationen als Härter als besonders geeignet erwiesen:

| 100%ige Phosphorsäure Gew.% | 100%ige Borfluorwasser-stoffsäure Gew.% | 100%ige p-Toluol-sulfosäure, oder p-Phenolsulfo-säure, Gew.% | Wasser Gew.% |
|---|---|---|---|
| 41,5 | 17 | 6,9 | 34,6 |
| 45,9 | 14,3 | 6,6 | 33,2 |
| 49,0 | 12,2 | 6,6 | 32,2 |

Die Verwendung der Phosphorsäure im Härtenkatalysator hat neben der Wasserstoffionen abgebenden Funktion noch folgende Wirkung:

Bei Brandbelastung ist die Phosphorsäure bei den in der Harzphase ablaufenden Reaktionen in ähnlicher Weise wie Borsäure wirksam. Es entsteht polymere Phosphorsäure, welche eine Pyrolyse durch Ausbildung eines glasigen Überzuges über die bereits gebildete kohlehaltige Porenstruktur hemmt. Diese Abdämmung gegen den Angriff von Sauerstoff und Wärmestrahlung ist hochtemperaturfest. Durch Entstehung stark reduzierend wirkender Phosphide wird die Bildung von CO und $CO_2$ zugunsten einer Kohlenstoffbildung gebremst. Auch das sogenannte Nachglimmen, hervorgerufen durch Oxidation des Kohlenstoffs zu CO und $CO_2$ ist eingeschränkt.

Auch die verwendete Borfluorwasserstoffsäure bewirkt noch eine Verbesserung der Nichtbrennbarkeit des Schaumstoffes. Mit den Füllstoffen gebildete Fluorborate werden durch Abgabe von Bortrifluorid in der Gasphase im Brandfalle wirksam.

Als Treibmittel eignen sich vor allem niedere Chlorfluorkohlenwasserstoffe, wie z. B. Trifluormonochlormethan oder Trichlortrifluorethan, sowie n-Pentan, alle mit einem Siedepunkt im Bereich von etwa 24°C bis 48°C. Bei Austausch eines Treibmittels (Trichlortrifluorethan) gegen ein anderes der oben angeführten ist die eingesetzte Menge durch einen Faktor zu dividieren:

Tausch von Trichlortrifluorethan (F = 1)

gegen n-Pentan F = 2,6

gegen Trifluormonochlormethan F = 1,8

So kann ein fest eingestelltes Raumgewicht bei Austausch gegen ein anderes Treibmittel beibehalten werden.

Erfahrungsgemäß ist das brennbare n-Pentan ohne Effekt auf die Unbrennbarkeit des Schaumstoffes.

Eine weitere Möglichkeit, einen Treibeffekt zu erzielen, besteht durch Eindüsen von Preßluft in die Vormischkammer des Intensivmischers beim Verarbeiten der Komponenten. Diese sogenannte "Nuklearisierungsluft" fördert infolge Keimbildung den Treibprozeß bei Gegenwart von Treibmitteln; sie kann aber auch schon ohne diese eine Schaumstruktur bewirken.

Der erfindungsgemäße Hartschaum stellt somit ein komplexes Reaktionsgemisch dar, innerhalb dessen bereits nach dem Vermischen der Komponenten A und B noch zusätzlich brandverhütende Bestandteile gebildet werden. Ferner laufen im Falle einer Brandbelastung schrittweise mit steigender Temperatur weitere Reaktionen ab, die ebenfalls einer Zündung des Schaumstoffes entgegenwirken.

Der erfindungsgemäße Hartschaum stellt aufgrund seiner mechanischen Festigkeit einen nicht brennbaren Baustoff dar, der als vorgefertigtes Teil oder zum Ausschäumen an Ort und Stelle verwendet werden kann. Erfindungsgemäß können Raumgewichte zwischen 50 kg/m$^3$ und 450 kg/m$^3$ eingestellt werden. Bei Raumgewichten bis zu 150 kg/m$^3$ entsteht ein nicht brennbarer Hartschaum mit sehr guten wärmedammenden Eigenschaften. Raumgewichte zwischen 200 und 450 kg/m$^3$ ergeben selbsttragende Bauteile. Vorzugsweise wird das Raumgewicht des erfindungsgemäßen Schaums im Bereich von 70 kg/m$^3$ bis 300 kg/m$^3$ eingestellt. Wenn eine besonders hohe Feuerwiderstandsklasse erwünscht ist bei gleichzeitig erhöhter mechanischer Beständigkeit, haben sich Raumgewichte zwischen 150 kg/m$^3$ und 250 kg/m$^3$ als besonders geeignet erwiesen.

Der erfindungsgemäße Hartschaum erfüllt bei üblichen konstruktiven Gestaltungen die Erfordernisse der Klasse A 2 bei der Brandbeständigkeitsprüfung im Brandschacht nach DIN 4102. Im Brandfalle entstehen im Sinne dieser DIN-Vorschrift keine toxischen Gase.

Die erfindungsgemäße einzuhaltende Härterzusammensetzung führt zu einem so geringen Restsäuregehalt, daß bei Verbindung des Schaumes mit metallischen Dämmplatten keinerlei Korrosionserscheinungen auftreten.

Ebenso ist bei dem erfindungsgemäßen Hartschaum die bei ähnlichen Systemen vorhandene Hygroskopie stark verringert.

Der Einsatz von vorkondensiertem Furanharz in der Harzkomponente ermöglicht eine bessere Regulierung der Reaktivität und verlängert die Steigzeit des Schaumes. Außerdem wird die Festigkeit der Zellstruktur verbessert.

Verwendet man anstelle üblicher Schaumstabilisatoren erfindungsgemäß pyrogene Kieselsäure als Stabilisator und gleichzeitig thioxotropierenden Zusatz, läßt sich die Porenstruktur besonders gut regulieren.

Der Vorteil des Zusatzes von Kupferoxid als Oxidationsmittel liegt, wie bereits angegeben, darin, daß während der Härtungsphase Umsetzungen mit den funktionellen Endgruppen der Harzkomponenten stattfinden. Dies führt im Brandfalle zur Verringerung des gebildeten Kohlenmonoxids in der geschlossenzelligen Porenstruktur und damit zu einer Verringerung der Toxizität der Brandgase.

Der Zusatz von Magnesiumhydroxysilikat und Aluminiumsilikaten ermöglicht Reaktionen mit den Anionen des Härtersystems, so daß diese abgebunden werden.

Phosphorsäure und Borfluorwasserstoffsäure des Härtersystems dienen als H-Ionendonator zur Kondensation des Harzsystems. Die gebildeten Phosphate wirken gleichzeitig als weiteres Flammschutzmittel.

Für den Einsatz wird das System als Zweikomponentensystem hergestellt. Die Komponente A enthält die Harzkomponente und den Füllstoff, die Komponente B den Härter. Wie bereits angegeben, kann das Treibmittel zur Komponente A zugemischt werden oder als weitere Komponente C beim Mischen der Komponenten A und B eingebracht werden.

Eine bevorzugte Zusammensetzung der Harzkomponente besteht aus einem Gemisch von

56,6 Gew.% Resolharz

29,9 Gew.% Furfurylalkohol

12,6 Gew.% Furanharz

0,9 Gew.% Schaumstabilisator.

Ist in Fällen bestimmter Füllstoffgemische der Reaktionsbeginn nach Härterzumischung verzögert, so daß eine erhöhte Reaktivität der Harzkomponente erwünscht ist, hat sich folgende Zusammensetzung als besonders geeignet erwiesen:

60,3 Gew.% Resolharz

38,8 Gew.% Furfurylalkohol

0,9 Gew.% Schaumstabilisator.

Der Verwendungsbereich des erfindungsgemäßen Hartschaumes ist sehr breit, insbesondere eignet er sich als nicht brennbarer Baustoff. Dabei können vorgefertigte Teile hergestellt werden, wie Platten, Halbschalen, Rohrummantlungen. Es können auch kontinuierlich mit kaschierten Folien oder Blechen versehene Schaumplatten auf sogenannten Zweibandmaschinen hergestellt werden. Das Zweikomponentensystem kann jedoch auch zum Ausschäumen von Hohlräumen vor Ort, wie sie beispielsweise bei Installations- oder Klimatisierungsschächten erwünscht ist, eingesetzt werden.

Vorgefertigte Platten wurden einer Vorprüfung nach DIN 4102 und DIN 53436 unterzogen. Die DIN 4102 richtet sich auf die brandtechnische Prüfung im Brandschacht bzw. Ofenversuche. DIN 53436 betrifft die Rauch- und Schwelgasentwicklung bei Brandbelastung.

Dabei wurden folgende Ergebnisse erzielt:

maximale Temperaturerhöhung im Ofen bei 750°C,

Durchschnittswert von drei Messungen: 32°C

(maximal zulässiger Grenzwert: +50°C).

Im Brandschacht betrug

die Flammenhöhe 50 cm (maximaler Grenzwert 65 cm)

Restlänge: 40 cm (Grenzwert 35 cm)

Rauchgastemperatur: 105°C (Grenzwert 125°C)

Rauchgasdichte: sehr gering, kein Nachbrennen, kein Nachglimmen

6

Rauchgasdichte: XP2 Kammer 2 % (Grenzwert 15 %)
Schwelgase nach DIN 53436, 0,01 Vol.% (Grenzwert 0,04 Vol.%).
Die Erfindung wird nun anhand von Beispielen noch näher erläutert.

**Beispiel 1**

**A-Komponente:**

| Harz- und Füllstoffe | (Vorkondensat aus Phenol und Formaldehyd) | 14,7 Gew. % |
|---|---|---|
| | Fufurylalkohol | 11,5 Gew. % |
| | Stabilisator | 1,0 Gew. % |
| | Aluminiumhydroxid | 48,5 Gew. % |
| | Borsäure | 12,5 Gew. % |
| | Natriumtetraborat | 2,5 Gew. % |
| | Kryolith | 8,3 Gew. % |
| | Kupferoxid | 1,0 Gew. % |
| | | 100,0 Gew.% |

**Reaktionsgemisch:**

100 Gew.Teile A-Komponente

3 - 6 Teile Treibmittel (Trichlortrifluoräthen)

| 17 Gew.Teile Härtergemisch | 50,0 Gew.% | Phosphorsäure |
|---|---|---|
| | 15,0 Gew.% | Borfluorwasserstoffsäure |
| | 5,5 Gew.% | Toluolsulfosäure |
| | 29,5 Gew.% | Wasser |

Man erhält einen Hartschaum mit je nach zugegebener Treibmittelmenge variablen Rohdichten von 100 - 350 kg/m$^3$, welcher sich durch deutlich gesenkte toxische Anteile im Schwelgas auszeichnet.

**Beispiel 2**

**A-Komponente:**

| (Harz- und Füllstoffe) | (Vorkondensat aus Phenol und Formaldehyd) | 15,7 Gew. % |
|---|---|---|
| | Fufurylalkohol | 12,5 Gew. % |
| | Stabilisator | 1,0 Gew. % |
| | Aluminiumhydroxid | 36,0 Gew. % |
| | Borsäure | 13,0 Gew. % |
| | Natriumtetraborat | 2,6 Gew. % |
| | Kryolith | 17,2 Gew. % |
| | Kupferoxid | 2,0 Gew. % |
| | | 100,0 Gew. % |

**Reaktionsgemisch:**

100 Gew. Teile A-Komponente
4 Gew. Teile Treibmittel (Trichlortrifluoräthen)
17 Gew. Teile Härtergemisch (wie Beispiel 1)
Man erhält einen Hartschaum mit einer Rohdichte um 100 kg/m³, welcher bei Brandbelastung infolge Sinterung der Füllstoffteilchen seine Struktur behält.

**Beispiel 3**

**A-Komponente:**

| (Vorkondensat aus Phenol und Formaldehyd) | 14,7 Gew. % |
|---|---|
| Furfurylalkohol | 11,5 Gew. % |
| Stabilisator | 1,0 Gew. % |
| Aluminiumhydroxid | 48,5 Gew. % |
| Borsäure | 12,5 Gew. % |
| Zinkborat | 2,5 Gew. % |
| Kryolith | 8,3 Gew. % |
| Kupferoxid | 1,0 Gew. % |
| | 100,0 Gew. % |

**Reaktionsgemisch:**

100 Gew. Teile A-Komponente
4 Gew. Teile Treibmittel (Trichlortrifluoräthan)
17 Gew. Teile Härtergemisch 50,0 Gew.% Phosphorsäure
15,0 Gew.% Borfluorwasserstoffsäure
5,5 Gew.% p-Toluolsulfosäure
29,5 Gew.% Wasser

Man erhält einen Hartschaum, welcher sich durch verlängerte Startzeit (das ist die Zeit zum Einsetzen der exothermen Reaktion) und Steigzeit auszeichnet.

**Beispiel 4**

**A-Komponente**
**(Harze und Füllstoffe)**

| (Vorkondensat aus Phenol und Formaldehyd) | 14,7 Gew.% |
|---|---|
| Furfurylalkohol | 11,5 Gew.% |
| Stabilisator | 1,0 Gew.% |
| Aluminiumhydroxid | 40,0 Gew.% |
| Bentonit | 8,5 Gew.% |
| Borsäure | 12,5 Gew.% |
| Natriumtetraborat | 2,5 Gew.% |
| Kryolith | 8,3 Gew.% |
| Kupferoxid | 1,0 Gew.% |
| | 100,0 Gew.% |

8

Man erhält mit demselben Reaktionsgemischansatz, wie bei Beispiel 3 angegeben, einen Hartschaum, welcher bei hoher Temperatureinwirkung infolge erhöhter Wasserdampfbarriere der Brandbelastung länger widersteht.

**Beispiel 5**

## A-Komponente
### (Harze und Füllstoffe)

| | |
|---|---:|
| (Vorkondensat aus Phenol und Formaldehyd) | 14,7 Gew.% |
| Furfurylalkohol | 11,5 Gew.% |
| Stabilisator | 1,0 Gew.% |
| Aluminiumhydroxid | 38,5 Gew.% |
| Perlite | 10,0 Gew.% |
| Borsäure | 12,5 Gew.% |
| Natriumtetraborat | 2,5 Gew.% |
| Kryolith | 8,3 Gew.% |
| Kupferoxid | 1,0 Gew.% |
| | 100,0 Gew.% |

Das Reaktionsgemisch unter denselben Bedingungen, wie vorher beschrieben, ergibt einen Hartschaum, welcher bei Raumgewichten um 100 kg/m$^3$ höhere Druckfestigkeiten aufweist, als Füllstoffgemische ohne diese Zusätze erzielen.

**Vergleichsbeispiel**

(nach Beispiel 4 von DE-B 28 25 295 mit 500 kg/m$^3$ Raumgewicht)
Zusammensetzung des Systems:

### Zusammensetzung des Systems:

| | | |
|---|---:|---|
| Phenolharz | 12,8 | Gew.% |
| Furfurylalkohol | 12,8 | " |
| Äthanol | 1,3 | " |
| Butanol | 1,3 | " |
| Butylglykol | 1,9 | " |
| Paraformaldehyd | 1,9 | " |
| Epoxyharz | 0,4 | " |
| Polyesterharz | 0,3 | " |
| Aluminiumhydroxid | 64,3 | " |
| Fasern | 0,4 | " |
| SiO$_2$ | 2,6 | " |
| | 100,0 | Gew.% |

Das Verhältnis organische Substanzen/anorganische Stoffe beträgt hier 1 : 2,06, ein Wert, der erfahrungsgemäß zu wesentlich höheren Heizwerten führt, als Klassifizierung als nichtbrennbar entsprechend DIN 4102 zuläßt.

Ermittelt man das gleiche Verhältnis im ausgehärteten Zustand, verschiebt sich dieser Wert sogar zu 1 : 1,60.

Nach dieser Rezeptur nachgearbeitete Proben zeigen Viskositätswerte, welche wegen der sehr hohen Zähigkeit der sogenannten A-Komponente mit Mühe Schaume vom Raumgewicht an die 500 kg/m³ ergeben.

Überdies entwickelt sich bei Belastung bei Schweltemperatur sehr viel Schwefeldioxid - soviel, daß im Kondensat (Wasser) im Abkühlrohr der Verschwelungsapparatur (DIN 53 436) eine übermäßig große Säurereaktion festzustellen ist.

Dieser hohe Schwefeldioxidgehalt im Schwelgas ist auch die Ursache für die gemessenen CO-Konzentrationen in der Inhalationskammer (Rattentest). Diese betrug in dem hier angeführten Beispiel 0,13 Vol.% (0,04 Vol.% ist der erlaubte Maximalwert).

Dieses Schwelgas ist somit als ausgesprochen toxisch anzusehen.

Das Vergleichsbeispiel zeigt die Nachteile des bekannten Werkstoffes besonders deutlich.

Alle nach den zuvor aufgeführten Beispielen hergestellten Hartschaume benötigen vor Belastung eine Reifezeit von etwa 7 Tagen. Erst dann ist eine vollständige Durchhärtung der Zellstruktur durch Quervernetzung gewährleistet.

Die in den Beispielen beschriebenen Ansätze lassen sich mit üblichen Komponenten-Dosier- und -Mischmaschinen verarbeiten, denn durch die erfindungsgemäß einzuhaltende Zusammensetzung ist die Viskosität des flüssigen Systems gegenüber den bekannten Systemen mit höheren Füllstoffgehalten erniedrigt.

**Patentansprüche**

1. Nicht brennbarer, Aluminiumhydroxid und weitere Komponenten als Füllstoffsystem enthaltender Hartschaum auf Basis von Phenolharz und Furanharz, dessen Gewichtsverhältnis Füllstoff:Harzkörper minddestens 2,5:1 und das Raumgewicht 50 kg/m³ bis 450 kg/m³ beträgt, und dessen Harzkomponente erhalten wurde durch Umsetzen von:

50 - 62 Gew.-Tl. Resolharz
0 - 15 Gew.-Tl. Furanharz
25 - 40 Gew.-Tl. Furfurylalkohol
0,5 - 5 Gew.-Tl. Schaumstabilisator
mit 14 - 17 Gew.-Tl. pro 100 Gew.-Tl. Harzkomponente + Füllstoff einer Härtermischung aus
40 - 50 Gew.-Tl. Phosphorsäure
12 - 17 Gew.-Tl. Borfluorwassersäure, sowie entweder
5,5 - 7 Gew.-Tl. p-Toluolsulfonsäure und
29,5 - 35 Gew.-Tl. Wasser oder
6 - 7 Gew.-Tl. p-Phenolsulfonsäure und
32 - 35 Gew.-Tl. Wasser,
dadurch gekennzeichnet,
daß der Füllstoff aus
40 - 55 Gew.-Tl. Aluminiumhydroxid, welches teilweise durch säureaktivierte Bentonite, Montmorillonite oder Zeolithe oder durch Magnesium- oder Zink-Aluminat der allgemeinen Formel $Me^{II}Al_2O_4$, natürliche vorkommende Spinelle, gemahlene Hochofenschlacke oder natürliche Perlite ersetzt sein kann,
10 - 20 Gew.-Tl. Borsäure
2 - 4 Gew.-Tl. Natriumtetraborat
7 - 25 Gew.-Tl. Kryolith und
1 - 3 Gew.-Tl. Kupfer-II-oxid
besteht, wobei das Gew.-Verhältnis von Borat:Borsäure 1:5 beträgt.

2. Nicht brennbarer Hartschaum nach Anspruch 1, dadurch gekennzeichnet,
daß anstelle von Natriumtetraborat Zinkborat ($ZnO \times 2\ B_2O_3$), Magnesiumhydroxid oder Zinkhydroxid im Füllstoffsystem enthalten ist.

3. Nicht brennbarer Hartschaum nach Ansprüchen 1 oder 2, dadurch gekennzeichnet,
daß ein Teil des Aluminiumhydroxids durch säureaktivierte Bentonite, Montmorillonite oder Zeolithe ersetzt ist, so daß 30 - 45 Gew.Tl. Aluminiumhydroxid mit 5 - 15 Gew.Tl. Bentonit, Montmorillonit oder Zeolith im Füllstoffsystem enthalten sind.

4. Nicht brennbarer Hartschaum nach den Ansprüchen 1 oder 2, <u>dadurch gekennzeichnet,</u>

daß ein Teil des Aluminiumhydroxids durch Magnesium- oder Zink-Aluminat der allgemeinen Formel Me$^{II}$Al$_2$O$_4$, natürlich vorkommende Spinelle, gemahlene Hochofenschlacke oder natürliche Perlite ersetzt ist, so daß

20 - 40 Gew.-Tl. Aluminiumhydroxid mit

10 - 30 Gew.-Tl. Aluminaten, Hochofenschlacke oder Perliten

im Füllstoffsystem enthalten sind.

5. Nicht brennbarer Hartschaum nach Ansprüchen 3 und 4. <u>dadurch gekennzeichnet,</u>

daß das Füllstoffsystem aus Aluminiumhydroxid und Bentonit, Montmorillonit, Zeolith, Aluminaten, Hochofenschlacke oder Perliten eine Siebdurchgangssummenkurve mit den Werten

25 % 5,5 μm

50 % 52,0 μm

75 % 80,0 μm

aufweist.

6. Nicht brennbarer Hartschaum nach Ansprüchen 1 - 5, <u>dadurch gekennzeichnet,</u>

daß der Schaumstabilisator pyrogene Kieselsäure ist.

7. Verwendung des Hartschaumes nach Ansprüchen 1 - 6 als nicht brennbarer Baustoff.

8. Verwendung nach Anspruch 7 in Form vorgefertigter Teile, wie Platten, Halbschalen, Rohrummantelungen.

9. Verwendung nach Anspruch 7 zum Ausschäumen von Hohlräumen im Bauwesen vor Ort.

## Claims

1. Non-flammable rigid foam on the basis of phenolic resin and furane resin containing aluminium hydroxide and further components as filler having a weight ratio of filler:resin body of at least 2,5:1 and the bulk density is from 50 kg/m$^3$ to 450 kg/m$^3$, and the resin component was obtained by reacting

50 to 62 weight parts resolic resin

0 to 15 weight parts furanic resin

25 to 40 weight parts furfuryl alcohol

0,5 to 5 weight parts foam stabiliser with

14 to 17 weight parts per 100 weight parts resin component and filler of a curing agent mixture comprising

40 to 50 weight parts phosphoric acid

12 to 17 weight parts boron hydrofluoric acid as well as

either

5,5 to 7 weight parts p-toluene sulphonic acid and

29,5 to 35 weight parts water or

6 to 7 weight parts p-phenol sulphonic acid and

32 to 35 weight parts water

<u>characterized in that</u>

the filler consists of

40 to 55 weight parts aluminium hydroxide a portion of which may be replaced by acid activated bentonite, montmorillonite or zeolite or by magnesium- or zinc aluminate of the general formula Me$^{II}$Al$_2$O$_4$, natural spinels, ground blast furnace slag or natural perlites,

10 to 20 weight parts boric acid

2 to 4 weight parts sodium tetraborate

7 to 25 weight parts cryolite, and

1 to 3 weight parts copper II oxide,

where the weight ratio of borate:boric acid is 1:5.

2. Non-flammable rigid foam of claim 1, <u>characterised in that</u>

instead of sodium tetraborate the filler system contains zinc borate (ZnO x 2B$_2$O$_3$), magnesium hydroxide or zinc hydroxide.

3. Non-flammable rigid foam of claims 1 or 2, <u>characterised in that</u>

a portion of the aluminium hydroxide is replaced by acid activated bentonite, montmorillonite or zeolite, so that the filler system contains 30 to 45 parts by weight aluminium hydroxide and 5 to 15 parts by weight bentonite, montmorillonite or zeolite.

4. Non-flammable rigid foam of claims 1 or 2, <u>characterised in that</u>
a portion of the aluminium hydroxide is replaced by magnesium or zinc aluminate of the general formula Me$^{II}$Al$_2$O$_4$, natural spinels, ground blast furnace slag or natural perlites, whereby the filler system contains 20 to 40 parts by weight aluminium hydroxide and 10 to 30 parts by weight aluminates, blast furnace slag or perlites.

5. Non-flammable rigid foam of claims 3 and 4, <u>characterised in that</u>
said filler system of aluminium hydroxide and bentonite, montmorillonite, zeolite, aluminates, blast furnace slag or perlites has a cumulative curve for mesh transition of

25 % 5,5 µm
50 % 52,0 µm
75 % 80 µm.

6. Non-flammable rigid foam of claims 1 to 5, <u>characterized in that</u>
the foam stabilizer is pyrogenic silica.

7. Use of the rigid foam of claims 1 to 6 as non-flammable building material.

8. Use of claim 7 as pre-manufactured parts such as panels, half shells, pipe claddings.

9. Use of claim 7 for filling cavities in buildings by in situ foaming.


**Revendications**

1. Mousse rigide incombustible, à base de résine phénolique et de résine furanique et contenant de l'hydroxyde d'aluminium et d'autres composants en tant que système de charge, dont le rapport en poids charge : masse de résine s'élève à au moins 2,5:1 et le poids spécifique à 50 kg/m$^3$ à 450 kg/m$^3$ et dont les composants de la résine s'obtiennent en mettant en présence:
50 - 62 parties en poids de résine résol,
0 - 15 parties en poids de résine furanique,
25 - 40 parties en poids d'alcool furfurylique,
0,5 - 5 parties en poids d'un stabilisateur de mousse
avec 14 - 17 parties en poids pour 100 parties en poids de composant de résine + charge, d'un mélange durcisseur formé de:
40 - 50 parties en poids d'acide phosphorique,
12 - 17 parties en poids d'acide hydrofluoborique, ainsi que de soit:
5,5 - 7 parties en poids d'acide p-toluolsulfonique et
29,5 - 35 parties en poids d'eau soit:
6 - 7 parties en poids d'acide p-phénolsulfonique et
32 - 35 parties en poids d'eau,
charactérisée en ce que la charge est constituée de
40 - 55 parties en poids d'hydroxyde d'aluminium qui peut être remplacé partiellement par de la bentonite de la montmorillonite ou de la zéolithe activée par de l'acide ou par de l'aluminate de magnesium ou de zinc de formule génerale Me$^{II}$Al$_2$O$_4$, du spinelle de provenance naturelle du laitier de haut fourneau pulvérisé ou de la perlite naturelle,
10 - 20 parties en poids d'acide borique,
2 - 4 parties en poids de tétraborate de sodium,
7 - 25 parties en poids de cryolithe,
1 - 3 parties en poids d'oxyde de cuivre - II,
le rapport en poids borate:acide borique s'élevant à 1:5.

2. Mousse rigide incombustible selon la revendication 1 caractérisée en ce que, à la place de tétraborate de sodium, il est contenu dans le système de charge du borate de zinc (ZnO x 2 B$_2$O$_3$) de l'hydroxyde de magnésium ou de l'hydroxyde de zinc.

3. Mousse rigide incombustible selon les revendications 1 ou 2, caractérisée en ce qu'une partie de l'hydroxyde d'aluminium est remplacée par de la bentonite de la montmorillonite ou de la zéolithe activée par un acide de façon qu'il soit contenu dans le système de charge 30 - 45 parties en poids d'hydroxyde d'aluminium avec 5 - 15 parties en poids de bentonite, de montmorillonite ou de zéolithe.

4. Mousse rigide incombustible selon les revendications 1 ou 2, caractérisée en ce qu'une partie de l'hydroxyde d'aluminium est remplacée par de l'aluminate de magnésium ou de zinc de formule génerale Me$^{II}$Al$_2$O$_4$, du spinelle d'origine naturelle du laitier de haut fourneau pulvérisé ou dde la perlite naturelle, de façon qu'il soit contenu dans le système de charge:
20 - 40 parties en poids d'hydroxyde d'aluminium avec
10 - 30 parties en poids d'aluminates de laitier de haut fourneau ou de perlites.

5. Mousse rigide incombustible selon les revendications 3 et 4, caractérisée en ce que le système de charge forme d'hydroxyde d'aluminium et de bentonite, de mottmorillotite, de zéolithe, d'aluminates, de laitier de haut fourneau de perlites présente une courbe granulometrique cumulée des passants ayant les valeurs:
25 % 5,5 µm

50 % 52,0 µm
75 % 80,0 µm

6 Mousse rigide incombustible selon les revendications 1 - 5, caractérisée en ce que le stabilisateur de mousse est de l'acide silicique pyrogène.

7. Utilisation de la mousse rigide selon les revendications 1 - 6, en tant que matériau de construction incombustible.

8. Utilisation selon la revendication 7 sous la forme d'éléments préfabriqués, comme des panneaux des demi-coquilles des gaines de tuyaux.

9. Utilisation selon la revendication 7 pour remplir de mousse des cavités dans la roche dans le bâtiment et les travaux publics.